# EUROPÄISCHE PATENTSCHRIFT

(11) **EP 3 997 363 B1**
(45) Veröffentlichungstag und Bekanntmachung des Hinweises auf die Patenterteilung: **06.05.2026**
(21) Anmeldenummer: 21711729.0
(22) Anmeldetag: 01.03.2021
(51) Int. Cl.: F16H 25/20, E05F 15/622, F16D 7/02

(54) **STELLANTRIEB MIT EINER DREHMOMENTBEGRENZUNGSVORRICHTUNG**
CONTROL DRIVE COMPRISING A TORQUE-LIMITING DEVICE
ENTRAÎNEMENT DE COMMANDE COMPRENANT UN DISPOSITIF DE LIMITATION DE COUPLE

(30) Priorität: 03.03.2020 DE 102020105716
(43) Veröffentlichungstag der Anmeldung: 18.05.2022
(73) Patentinhaber: Edscha Engineering GmbH, 42855 Remscheid (DE)
(72) Erfinder: DÖRNEN, Jörg, 42855 Remscheid (DE); BARTSCHIES, Christian, 42855 Remscheid (DE); SCHMIDT, Christoph, 42855 Remscheid (DE); BALS, Jochen, 42855 Remscheid (DE)
(74) Vertreter: IPrime Bonnekamp Sparing Patentanwaltsgesellschaft mbH
(86) Internationale Anmeldenummer: PCT/DE2021/100206
(87) Internationale Veröffentlichungsnummer: WO 2021/175370

(56) Entgegenhaltungen:
- EP-A1- 2 159 438
- EP-A2- 1 731 783
- EP-B1- 1 731 783
- DE-A1- 102008 031 228
- DE-A1- 102016 113 353
- DE-B4- 102008 031 228

## Beschreibung

Die Erfindung betrifft einen Stellantrieb, insbesondere zur Verstellung einer schwenkbaren Fahrzeugklappe, nach dem Oberbegriff des Anspruchs 1.

Aus der Praxis sind Stellantriebe bekannt, welche häufig als Linearantriebe ausgebildet sind, die zur automatischen Verstellung einer Fahrzeugklappe, beispielsweise einer seitlichen Fahrzeugtür oder einer Heckklappe, verwendet werden. Derartige Stellantriebe umfassen dabei ein Gehäuse, welches in der Regel aus zwei ineinander konzentrisch angeordneten Gehäuseteilen besteht, sodass das Gehäuse in seiner Länge durch Verlagerung der Gehäuseteile zueinander veränderlich ist. Hierzu ist in dem Gehäuse ein Spindelantrieb angeordnet, welcher die Verlagerung der Gehäuseteile antreibt. Der Spindelantrieb umfasst dabei in der Regel eine drehbar in dem Gehäuse gelagerte Spindelstange und eine entsprechende Spindelmutter, wobei die Spindelmutter fest mit einem der beiden Gehäuseteile verbunden ist und so bei Betätigung der Spindelstange translatorisch verfahren wird. Die Spindelstange wird dabei durch ein Koppelelement drehbar angetrieben. Das Koppelelement ist zum Beispiel eine Ausgangswelle eines Elektromotors oder ein Getriebeteil, welches zwischen der Spindelstange und dem Elektromotor vorgesehen ist.

Um eine mechanische Überlastung durch äußere Kräfte zu vermeiden, weisen Stellantriebe häufig eine Drehmomentbegrenzungsvorrichtung auf, welche der Begrenzung des von dem Koppelelement auf die Spindelstange übertragenden Drehmomentes dient. Zudem weisen derartige Stellantriebe auch eine Bremsvorrichtung auf, welche eine unbeabsichtigte Verstellung der Fahrzeugklappe durch äußere mechanische Kräfte verhindern soll und zudem das Nachlaufverhalten des Stellantriebes definiert. Nachteilig sind die Bremsvorrichtung und die Drehmomentbegrenzungsvorrichtung axial hintereinander angeordnet und benötigen einen großen Bauraum innerhalb des Gehäuses.

EP 3 032 020 B1 zeigt einen Stellantrieb zur automatischen Verstellung einer Fahrzeugtür, insbesondere einer Heckklappe, umfassend ein Gehäuse, wobei das Gehäuse ein erstes röhrenförmiges Gehäuseteil und ein zweites röhrenförmiges Gehäuseteil umfasst, welche zueinander teleskopisch verfahren werden können. Der Stellantrieb umfasst weiter eine in dem Gehäuse drehbar gelagerte Spindelstange, ein als Außenhülle ausgebildetes Koppelelement und eine zwischen dem Koppelelement und der Spindelstange angeordnete Drehmomentbegrenzungsvorrichtung zur Begrenzung des von dem Koppelelement auf die Spindelstange übertragenen Drehmomentes. Die Drehmomentbegrenzungsvorrichtung umfasst eine als Passstift ausgebildete Adapterhülse, wobei die Adapterhülse zwischen der Spindelstange und dem Koppelelement angeordnet ist. Nachteilig an dem gezeigten Stellantrieb ist, dass die Adapterhülse ein erhebliches Bauvolumen aufweist und entsprechend schon aufgrund der benötigten Materialmenge kostenintensiv in der Herstellung ist. Zudem muss aufgrund der Reibung eine Härtung des Koppelelementes vorgenommen werden, was ebenfalls die Herstellungskosten erhöht.

DE 36 28 285 A1 zeigt einen elektrischen Stellantrieb, umfassend ein Gehäuse, eine in dem Gehäuse drehbar gelagerte Spindelstange, einen Rotor zum Antrieb einer Drehbewegung der Spindelstange und eine zwischen dem Rotor und der Spindelstange angeordnete Drehmomentbegrenzungsvorrichtung zur Begrenzung des von dem Rotor auf die Spindelstange übertragenen Drehmomentes. Die Drehmomentbegrenzungsvorrichtung umfasst einen drehfest an einem ersten Ende der Spindelstange angeordneten Flansch und einen an dem Flansch über eine Schraubverbindung befestigten Anker. An dem Anker ist ein zylindrischer Ansatz vorgesehen, welcher in eine entsprechende Ausnehmung in dem Rotor reibschlüssig hineinragt. Nachteilig an dem gezeigten Stellantrieb ist, dass die Drehmomentbegrenzungsvorrichtung einen großen Bauraum einnimmt und einen hohen Materialaufwand mit entsprechend hohen Kosten benötigt.

DE 195 45 379 C1 zeigt einen Stellantrieb mit einem Gehäuse und eine in dem Gehäuse drehbar gelagerte Spindelstange, wobei die Spindelstange drehfest mit einer Motorwelle zum Antrieb einer Drehbewegung der Spindelstange verbunden ist.

EP 2 159 438 A1 zeigt eine Drehmomentbegrenzungsvorrichtung, umfassend eine an einem ersten Ende einer Spindelstange angeformten topfförmigen Kopplungsabschnitt und eine in den topfförmigen Kopplungsabschnitt hineinragende Ausgangswelle zum Antrieb einer Drehbewegung der Spindelstange. Zwischen dem Kopplungsabschnitt der Spindelstange und der Ausgangswelle ist radial ein Toleranzelement angeordnet, welche einen Grenzwert des von der Ausgangswelle auf die Spindelstange übertragenen Drehmomentes begrenzt. Nachteilig an der gezeigten Drehmomentbegrenzungsvorrichtung ist, dass das Toleranzelement sowohl gegenüber der Ausgangswelle als auch gegenüber dem Kopplungsabschnitt der Spindelstange lediglich reibschlüssig verbunden ist, sodass keine genaue Festlegung des entsprechenden Grenzwertes der Drehmomentübertragung sichergestellt ist.

DE 10 2008 031 228 A1 zeigt einen Spindelantrieb zur Verstellung einer schwenkbaren Fahrzeugklappe, umfassend ein Gehäuse, eine in dem Gehäuse drehbar gelagerte Spindelstange, eine Getriebewelle zum Antrieb einer Drehbewegung der Spindelstange und eine zwischen der Getriebewelle und der Spindelstange angeordnete Drehmomentbegrenzungsvorrichtung zur Begrenzung des von der ersten Getriebewelle auf die Spindelstange übertragenen Drehmomentes. Die Drehmomentbegrenzungsvorrichtung umfasst dabei eine an einem ersten Ende der Spindelstange drehfest angeordnete Adapterhülse und ein zwischen der Spindelstange und der Adapterhülse angeordnetes Toleranzelement, welches als Toleranzring ausgebildet ist. Nachteilig an dem gezeigten Spindelantrieb ist, dass der Toleranzring sowohl gegenüber der Getriebewelle als auch über der Adapterhülse lediglich reibschlüssig festgelegt ist, sodass kein wohldefinierter Schwellenwert des Drehmomentes vorliegt, bei dem die Drehmomentbegrenzungsvorrichtung eine Entkopplung zwischen der Getriebewelle und der Spindelstange bewirkt.

US 2014/0166423 A1 zeigt ein Toleranzelement, wobei das Toleranzelement radial zwischen einer inneren Komponente und einer äußeren Komponente angeordnet werden kann, um eine Übertragung eines Drehmomentes zwischen den beiden Komponenten zu begrenzen.

US 2011/0290050 A1 zeigt einen Stellantrieb, umfassend ein Gehäuse, eine in dem Gehäuse drehbar gelagerte Spindelstange, wobei die Spindelstange durch Kopplung mit einem Motor drehbar angetrieben werden kann.

DE 10 2018 100 562 A1 zeigt einen Stellantrieb zur Verstellung einer schwenkbaren Fahrzeugklappe, umfassend ein Gehäuse und eine in dem Gehäuse drehbargelagerte Spindelstange, wobei die Spindelstange über eine Antriebsvorrichtung drehbar angetrieben wird.

DE 10 2008 008 541 B3 zeigt eine Betätigungsvorrichtung für ein Ventil oder eine Armatur mit einer durch Nocken und Kipphebel steuerbaren Drehmomentbegrenzungsvorrichtung.

EP 3 232 076 A1 zeigt ein als Schlingfeder ausgebildetes Kopplungselement, welches zwischen einem ersten Ende einer Spindelstange und einem antriebsseitigen Federtopf zur Drehmomentbegrenzung angeordnet werden kann.

EP 1 731 783 A2 zeigt eine Kraft-bzw. eine Drehmomentbegrenzungsvorrichtung zwischen einem Gehäuse mit einer Bohrung, in der sich eine Welle befindet, die ein Streifen elastischen Material umfasst, der an einer der Komponenten befestigt ist reibschlüssig mit der zweiten Komponente in Eingriff steht.

DE 10 2016 113 353 A1 zeigt einen Stellantrieb, insbesondere einen Spindelantrieb zur Verstellung einer schwenkbaren Fahrzeugklappe, umfassend ein Gehäuse, eine in dem Gehäuse drehbar gelagerte Spindelstange, ein erstes Koppelelement zum Antrieb einer Drehbewegung der Spindelstange, eine zwischen dem ersten Koppelelement und der Spindelstange angeordnete Drehmomentbegrenzungsvorrichtung zur Begrenzung des von dem ersten Koppelelement auf die Spindelstange übertragenen Drehmomentes und eine Bremsanordnung, wobei die Bremsanordnung ein Bremsengehäuse umfasst.

Es ist die Aufgabe der Erfindung, einen Stellantrieb zu schaffen, der kompakt ausgebildet und kostengünstig herstellbar ist.

Diese Aufgabe wird erfindungsgemäß durch einen Stellantrieb mit den Merkmalen nach Anspruch 1 gelöst

Gemäss der Erfindung ist ein Stellantrieb, insbesondere ein Spindelantrieb zur Verstellung einer schwenkbaren Fahrzeugklappe geschaffen, umfassend ein Gehäuse, eine in dem Gehäuse drehbar gelagerte Spindelstange, ein erstes Koppelelement zum Antrieb einer Drehbewegung der Spindelstange und eine zwischen dem ersten Koppelelement und der Spindelstange angeordnete Drehmomentbegrenzungsvorrichtung zur Begrenzung des von dem ersten Koppelelement auf die Spindelstange übertragenen Drehmomentes. Die Drehmomentbegrenzungsvorrichtung umfasst eine an einem ersten Ende der Spindelstange drehfest angeordnete Adapterhülse und ein zwischen der Spindelstange und dem ersten Koppelelement angeordnetes erstes Toleranzelement, wobei das erste Toleranzelement drehfest an einem von erstem Koppelelement und Adapterhülse festgelegt ist. Weiter weist das eine von erstem Koppelelement und Adapterhülse zumindest ein erstes Rückhalteelement auf. Dabei ist das erste Rückhalteelement als Vorsprung mit einer ersten seitlichen Stützfläche und einer der ersten seitlichen Stützfläche gegenüberliegenden zweiten seitlichen Stützfläche ausgebildet und das erste Rückhalteelement einstückig mit dem einen von erstem Koppelelement und Adapterhülse ausgebildet.

Vorteilhaft kann das Rückhalteelement bei der Herstellung des ersten Koppelelementes bzw. der Adapterhülse beispielsweise in einem Spritzgussverfahren aus Kunststoff kostengünstig in einem gemeinsamen Herstellungsschritt angeformt werden. Dabei wird insbesondere vorteilhaft sichergestellt, dass das Rückhalteelement sich nicht von dem einen von erstem Koppelelement und Adapterhülse lösen kann. Der erfindungsgemäße Stellantrieb zeichnet sich dadurch aus, dass sich das erste Toleranzelement an der ersten seitlichen Stützfläche und der zweiten seitlichen Stützfläche des ersten Rückhaltelements abstützt. Hierdurch wird vorteilhaft durch Formschluss verhindert, dass das erste Toleranzelement in Richtung auf die erste seitliche Stützfläche gedreht werden kann, da das erste Toleranzelement an die erste seitliche Stützfläche anschlägt und sich nicht weiter drehen kann. Vorteilhaft wird hierdurch eine drehfeste Verbindung für beide Drehrichtungen zwischen dem ersten Toleranzelement und dem einen von Koppelelement und Adapterhülse hergestellt. Vorteilhaft wird so ein Stellantrieb geschaffen, der einen wohl definierten Schwellenwert des Drehmomentes aufweist, bei dem die Drehmomentbegrenzungsvorrichtung eine Entkopplung zwischen dem Koppelelement und der Spindelstange verursacht. Zudem kann durch die Verwendung einer Adapterhülse ein Toleranzelement mit reduzierter Dicke verwendet werden, wobei die Reibungseigenschaften und somit die Wahl des Schwellenwerts für das Drehmoment durch Ausgestaltung der Oberfläche des Toleranzelementes ausgewählt werden kann. Weiter ist es nicht erforderlich, das Koppelelement bzw. die Adapterhülse zu härten, was die Herstellungskosten erheblich reduziert.

Das erste Rückhalteelement verhindert bevorzugt durch Formschluss eine Drehbewegung des ersten Toleranzelementes relativ zu dem einen von erstem Koppelelement und Adapterhülse in zumindest eine Drehrichtung.

Das erste Toleranzelement ist bevorzugt als teilzylinderförmiges Schalensegment ausgebildet. Zweckmäßigerweise weist das erste Toleranzelement in radialer Richtung auf das eine von Koppelelement und Adapterhülse orientierte Prägungen auf. Vorteilhaft wird durch die Prägungen eine radiale Vorspannung zwischen dem Koppelelement und der Adapterhülse erzielt. Der Grenzwert des Drehmomentes, ab dem das Toleranzelement gegenüber dem anderen von Koppelelement und Adapterhülse durchrutscht, wird im Wesentlichen durch die Oberfläche des Toleranzelementes und der über die Prägungen erzeugten Vorspannung definiert.

Besonders bevorzugt umfasst die Drehmomentbegrenzungsvorrichtung ein zweites Toleranzelement. In einer besonders bevorzugten Weiterbildung ist vorgesehen, dass sich das zweite Toleranzelement zumindest an der zweiten seitlichen Stützfläche des ersten Rückhalteelementes abstützt. Durch das Vorsehen eines zweiten Toleranzelementes wird vorteilhaft eine verbesserte Verteilung der aufzunehmenden Reibungskräfte, welche durch die Reibung des Toleranzelementes mit dem anderen von Koppelelement und Adapterhülse entsteht.

In einer besonders bevorzugten Weiterbildung weist das eine von erstem Koppelelement und Adapterhülse zumindest ein zweites Rückhalteelement auf. Das zweite Rückhalteelement ist in einer ersten bevorzugten Ausgestaltung ersten zweiten Rückhalteelement gegenüberliegend angeordnet. In einer zweckmäßigen Ausgestaltung ist das zweite Rückhalteelement als Vorsprung mit einer ersten seitlichen Stützfläche und einer der ersten seitlichen Stützfläche gegenüberliegenden zweiten seitlichen Stützfläche ausgebildet. Bevorzugt ist das zweite Rückhalteelement einstückig mit dem ein von erstem Koppelelement und Adapterhülse ausgebildet. Vorteilhaft können so zwei Toleranzelemente symmetrisch zueinander angeordnet und drehfest an dem einen von Koppelelement und Adapterhülse festgelegt werden.

Zweckmäßigerweise stützt sich das zweite Toleranzelement an der zweiten seitlichen Stützfläche des ersten Rückhalteelementes und an der zweiten seitlichen Stützfläche des zweiten Rückhalteelementes ab. Vorteilhaft ist das zweite Toleranzelement zwischen dem ersten Rückhalteelement und dem zweiten Rückhalteelement gegen eine Verdrehung gesichert und drehfest an dem einen von Koppelelement und Adapterhülse festgelegt. Das erste Toleranzelement und das zweite Toleranzelement sind voneinander bevorzugt durch das erste Rückhalteelement und das zweite Rückhalteelement voneinander beabstandet.

In einer bevorzugten Ausgestaltung des Stellantriebes ist vorgesehen, dass das erste Koppelelement eine der Spindelstange zugewandte hohlzylindrisches Aufnahme mit einem Boden und einer Seitenwand aufweist. Besonders bevorzugt ist der Boden ringförmig ausgebildet. Zweckmäßigerweise bildet die Innenseite der Seitenwand, welche der Aufnahme zugewandt ist, eine Reibfläche, über die die reibschlüssige Kraftübertragung zwischen dem Koppelelement und der Spindelstange bzw. der Adapterhülse vermittelt wird.

In einer bevorzugten Weiterbildung sind das erste Toleranzelement und die Adapterhülse zumindest teilweise in der hohlzylindrischen Aufnahme aufgenommen. Besonders bevorzugt ist das erste Toleranzelement und die Adapterhülse vollständig in der hohlzylindrischen Aufnahme aufgenommen. Vorteilhaft wird hierdurch eine besonders kompakte Ausbildung der Drehmomentbegrenzungsvorrichtung erreicht, sodass die Baulänge des Stellantriebes reduziert werden kann.

Bevorzugt ist das erste Rückhalteelement auf einer Innenseite der Seitenwand der hohlzylindrischen Aufnahme angeordnet. Vorteilhaft kann hierdurch das erste Toleranzelement drehfest an das Koppelelement festgelegt werden. Zweckmäßigerweise liegt das erste Toleranzelement flächig an der Innenseite der Seitenwand der hohlzylindrischen Aufnahme an und wird bezüglich einer Drehung durch das erste Rückhalteelement fixiert.

In einer bevorzugten Ausgestaltung ist vorgesehen, dass eine Bremsanordnung in dem Gehäuse angeordnet ist, wobei die Bremsanordnung ein Bremsgehäuse umfasst. Bevorzugt ist das Bremsgehäuse konzentrisch um ein erstes Ende der Spindelstange angeordnet. Die Bremsanordnung dient vorteilhaft zur Abbremsung der Drehbewegung der Spindelstange, um das Nachlaufverhalten bei Abschaltung des die Spindelstange bzw. des das Koppelelement antreibenden Motors zu steuern.

Bevorzugt durchsetzt das erste Koppelelement das Bremsgehäuse der Bremsanordnung zumindest teilweise. Vorteilhaft wird hierdurch eine kompakte Bauweise des Stellantriebes erzielt, da hierdurch die Bremsanordnung und die Drehmomentbegrenzungsvorrichtung axial überlappen und hierdurch der Überlappbereich eine Verkürzung des Stellantriebes zur Folge hat.

In einer vorteilhaften Ausgestaltung umfasst der Stellantrieb eine Bremsanordnung, wobei die Bremsanordnung ein Bremsgehäuse umfasst. Vorteilhaft können sich die Drehmomentbegrenzungsvorrichtung und die Bremsanordnung axial zumindest teilweise überlappen. Vorteilhaft weist der Stellantrieb gegenüber aus dem Stand der Technik bekannten Stellantrieben, welche sowohl eine Bremsanordnung als auch eine Drehmomentbegrenzungsvorrichtung aufweisen, eine verkürzte Baulänge auf, sodass der Stellantrieb kompakt aufgebaut ist.

In einer vorteilhaften Ausgestaltung umfasst die Bremsanordnung ein erstes Bremselement, wobei das erste Bremselement drehfest mit der Spindelstange verbunden ist. Das erste Bremselement ist bevorzugt als ringförmige Innenlamelle ausgebildet und weist an seinem Innendurchmesser eine Innenverzahnung auf. Besonders bevorzugt weist die Spindelstange ein Rillenprofil auf, welches mit der Innenverzahnung des ersten Bremselementes kämmt. Vorteilhaft wird hierdurch eine zuverlässige drehfeste Verbindung zwischen der Spindelstange und dem ersten Bremselement hergestellt. Weiter vorteilhaft ist das erste Bremselement dabei jedoch axial relativ zu der Spindelstange verlagerbar.

In einer zweckmäßigen Ausgestaltung umfasst die Bremsanordnung ein zweites Bremselement, wobei das zweite Bremselement drehfest mit dem Bremsgehäuse verbunden ist. Zweckmäßigerweise ist das zweite Bremselement als ringförmige Scheibe mit mehreren radial nach außen gerichteten Vorsprüngen ausgebildet, wobei die Vorsprünge schlitzförmige Aussparungen des Bremsgehäuses durchsetzen. Vorteilhaft ist das zweite Bremselement drehfest mit der Spindelstange verbunden, jedoch axial entlang einer Längsachse der Spindelstange verlagerbar. Vorteilhaft können das erste Bremselement und das zweite Bremselement gegeneinander vorgespannt werden und so die auf die Spindelstange wirkende Bremskraft gesteuert werden. In einer zweckmäßigen Weiterbildung ist zwischen dem ersten Bremselement und den zweiten Bremselement ein Zwischenelement angeordnet. Das Zwischenelement ist bevorzugt als ringförmige Scheibe aus einem Carbongewebe, insbesondere einem in einem Kunststoff eingebetteten Geflecht von Kohlenstofffasern, ausgebildet.

In einer bevorzugten Ausgestaltung umfasst die Bremsanordnung ein Vorspannmittel zur axialen Vorspannung des ersten Bremselementes auf das zweite Bremselement zur Erzeugung einer Bremskraft. Besonders bevorzugt ist das Vorspannmittel als Wellfeder ausgebildet. Das Vorspannmittel umläuft bevorzugt das erste Ende der Spindelstange konzentrisch. Vorteilhaft wird durch das Vorspannmittel eine vordefinierte Bremskraft durch die Reibung zwischen dem ersten Bremselement und den zweiten Bremselement, bevorzugt vermittelt über das Zwischenelement, erzeugt.

Bevorzugt umfasst die Drehmomentbegrenzungsvorrichtung eine an einem ersten Ende der Spindelstange drehfest angeordnete Adapterhülse und ein Toleranzelement, wobei das Toleranzelement radial zwischen der Adapterhülse und dem ersten Koppelelement angeordnet ist. Besonders bevorzugt überlappen sich das Vorspannmittel und eines von Adapterhülse und Toleranzelement axial zumindest abschnittsweise. Zweckmäßigerweise ist die Drehmomentbegrenzungsvorrichtung durch eine in dem Bremsgehäuse vorgesehenen Öffnung teilweise in die Bremsanordnung eingesetzt. Vorteilhaft werden die Funktionen der Drehmomentbegrenzungsvorrichtung und der Bremsanordnung weiterhin vollständig erfüllt und durch die in axialer Richtung vorgesehene Überlappung der Drehmomentbegrenzungsvorrichtung und der Bremsanordnung ein kompakter Aufbau des Stellantriebes erreicht.

Weitere Vorteile, Eigenschaften und Weiterbildungen der Erfindung ergeben sich aus der nachstehenden Beschreibung eines bevorzugten Ausführungsbeispiels sowie aus den abhängigen Ansprüchen.

Die Erfindung wird nachfolgend unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel eines Stellantriebes in einer seitlichen Querschnittansicht.
- Fig. 2: zeigt eine frontale Querschnittsansicht der Drehmomentbegrenzungsvorrichtung aus Fig. 1 des Stellantriebes.
- Fig. 3: zeigt die Drehmomentbegrenzungsvorrichtung aus Fig. 1 in einer Explosionsansicht.

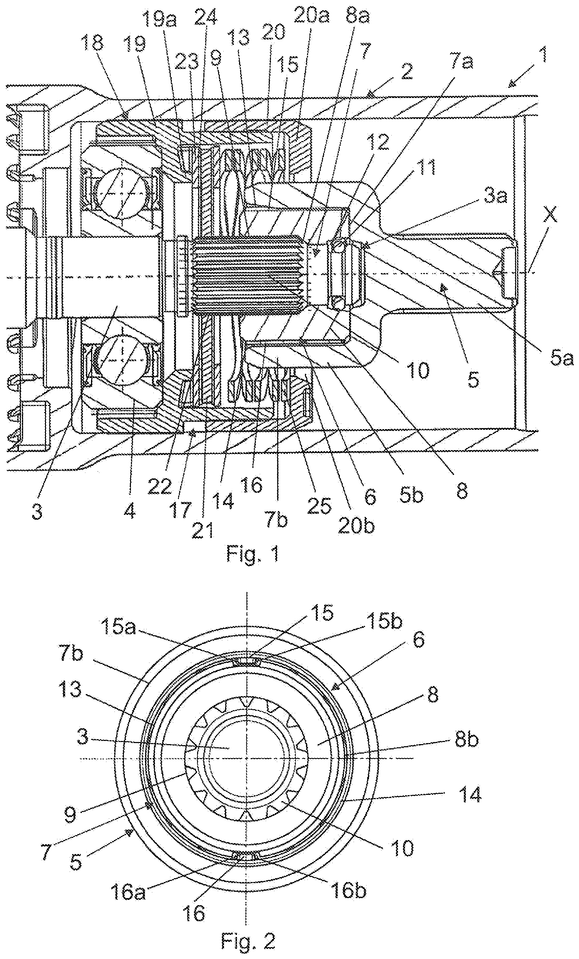

Fig. 1 zeigt ein bevorzugtes Ausführungsbeispiel eines Stellantriebes 1 in einer seitlichen Querschnittsansicht. Der abschnittsweise dargestellte Stellantrieb 1 umfasst ein Gehäuse 2, wobei das Gehäuse 2 hohlzylindrisch ausgebildet ist und eine Spindelstange 3 konzentrisch umgibt. Die Spindelstange 3 ist über ein Kugellager 4 drehbar in dem Gehäuse 2 gelagert.

Die Spindelstange 3 weist in einem hier nicht gezeigten Abschnitt ein Antriebsgewinde auf, welches mit einer hier nicht gezeigten Spindelmutter mit entsprechendem Innengewinde kämmt, sodass bei Drehung der Spindelstange 3 die Spindelmutter gemeinsam mit einem Gehäuseteil des Gehäuses 2 in Richtung einer Längsachse X der Spindelstange 3 verstellbar ist.

Zum Antrieb der Drehbewegung der Spindelstange 3 ist mit einem ersten Ende 3a der Spindelstange 3 ein Koppelelement 5 gekoppelt, wobei zwischen dem Koppelelement 5 und der Spindelstange 3 eine Drehmomentbegrenzungsvorrichtung 6 angeordnet ist, welche ein von dem ersten Koppelelement 5 auf die Spindelstange 3 übertragenes Drehmoment begrenzt. Vorteilhaft können durch die Drehmomentbegrenzungsvorrichtung 6 exzessive äußere Kräfte, welche beispielsweise durch eine Einwirkung auf die Fahrzeugklappe, zum Beispiel einen Zusammenstoß mit einem Hindernis, auftreten, von dem Getriebeabschnitt bzw. dem Elektromotor abgekoppelt werden. Vorteilhaft können hierdurch Schäden für den Elektromotor bzw. das Getriebe vermieden werden.

Das Koppelelement 5 ist als Getriebeadapter ausgebildet, wobei das Koppelelement 5 einen der Spindelstange 3 abgewandtes erstes Ende 5a umfasst, welches stiftförmig ausgebildet ist und mit einem hier nicht abgebildeten Getriebe oder einer Ausgangswelle eines Motors verbindbar ist. Weiter umfasst das Koppelelement 5 ein der Spindelstange 3 zugewandtes zweites Ende 5b, welches topfförmig ausgebildet ist und eine hohlzylindrische Aufnahme 7 bildet. Die hohlzylindrisch Aufnahme 7 weist einen ringförmigen Boden 7a und eine hohlzylinderförmige Seitenwand 7b auf. In der hohlzylindrischen Aufnahme 7 ist die Drehmomentbegrenzungsvorrichtung 6 aufgenommen.

Die Drehmomentbegrenzungsvorrichtung 6 ist als Rutschkupplung ausgebildet und umfasst eine an dem ersten Ende 3a der Spindelstange 3 drehfest angeordnete Adapterhülse 8. Die Adapterhülse 8 ist hohlzylindrisch ausgebildet und weist eine Innenverzahnung 9 auf, welche an einem der Spindelstange 3 zugewandten Ende Zähne aufweist, welche am Innenumfang der Adapterhülse 8 in Richtung der Längsachse X der Spindelstange 3 verlaufen.

Die Spindelstange 3 weist ein entlang ihrer Längsachse X verlaufendes Rillenprofil 10 auf, welches mit der an dem Innenumfang der Adapterhülse 8 vorgesehenen Innenverzahnung 9 kämmt. Hierdurch besteht eine drehfeste Verbindung zwischen der Adapterhülse 8 und der Spindelstange 3. Dabei verjüngt sich der Innenumfang der Adapterhülse 8 unter Bildung einer Stufe 8a, sodass die Adapterhülse 8 zumindest in eine Richtung axial gesichert ist. Vorteilhaft lässt sich die Adapter 8 auf das erste Ende 3a der Spindelstange 3 aufschieben, wobei durch die Stufe 8a am Innenumfang der Adapterhülse 8 eine Montageposition der Adapterhülse definiert wird.

Die Adapterhülse 8 dient im Wesentlichen dazu, den radialen Zwischenraum zwischen dem ersten Ende 3a der Spindelstange 3 und der hohlzylinderförmigen Seitenwand 7b der Aufnahme 7 des Koppelelementes 5 zu überbrücken, um eine auf Reibungskräfte basierende kraftschlüssige Kopplung zwischen der Spindelstange 3 und dem Koppelelement 5 herzustellen. Vorteilhaft kann so durch entsprechende Anpassung der Adapterhülse 8 eine zuverlässige Kopplung zwischen der Spindelstange 3 und einem beliebigen Koppelelement mit gegebenenfalls kleiner oder größer dimensionierter Aufnahme hergestellt werden.

Die Adapterhülse 8 wird durch einen Sicherungsring 11 axial auf der Spindelstange 3 gesichert. Der Sicherungsring 11 ist dabei in einer an dem ersten Ende 3a der Spindelstange 3 vorgesehenen ringförmigen Nut 12 angeordnet. Der Sicherungsring 11 ist als elastischer O-Ring ausgebildet. Die für das Aufschieben der Adapterhülse 8 benötigten Aufpresskräfte sind dabei deutlich geringer als die zur Entfernung der Adapterhülse 8 notwendigen Abziehkräfte. Vorteilhaft kann so die Adapterhülse 8 leicht auf der Spindelstange 3 montiert werden, indem die Adapterhülse 8 auf das erste Ende 3a der Spindelstange 3 mit etwas Kraft aufgeschoben wird. Die Adapterhülse 8 ist danach durch den Sicherungsring 11 axial gegenüber der Spindelstange 3 gesichert.

Weiter umfasst die Drehmomentbegrenzungsvorrichtung 6 ein radial zwischen der Adapterhülse 8 und der Innenseite der hohlzylinderförmigen Seitenwand 7b des Koppelelementes 5 angeordnetes erstes Toleranzelement 13 und ein zweites Toleranzelement 14. Das erste Toleranzelement 13 und das zweite Toleranzelement 14 sind drehfest an der Innenseite der hohlzylinderförmigen Seitenwand 7b des Koppelelementes 5 festgelegt. Hierzu sind an der hohlzylinderförmigen Seitenwand 7b ein erstes Rückhalteelement 15 und ein zweites Rückhalteelement 16 vorgesehen, welche eine Drehung des ersten Toleranzelementes 13 bzw. des zweiten Toleranzelementes 14 verhindern, wie nachfolgend noch näher erläutert.

Der Stellantrieb 1 umfasst weiter eine Bremsanordnung 17, welche der Abbremsung der Drehbewegung der Spindelstange 3 dient. Hierdurch soll vorteilhaft das Nachlaufverhalten bei Abschaltung des Antriebs der Drehbewegung der Spindelstange 3 verbessert werden, sodass eine präzise Verstellung einer schwenkbaren Fahrzeugklappe ermöglicht wird.

Die Bremsanordnung 17 umfasst ein Bremsengehäuse 18, welches durch ein erstes Bremsgehäuseteil 19 und ein zweites Bremsgehäuseteil 20 gebildet wird. Das erste Bremsgehäuseteil 19 ist als gestufter Hohlzylinder ausgebildet und weist entlang seiner Innenseite einen ringförmige Anschlag 19a auf. Das zweite Bremsgehäuseteil 20 ist als Hohlzylinder ausgebildet mit einem ringförmigen, radial nach innen gerichteten Kragen 20a, der eine Oberseite des zweiten Bremsgehäuseteil 20 bildet. Das zweite Bremsgehäuseteil 20 ist wie ein Deckel auf das erste Bremsgehäuseteil 19 aufgesteckt, sodass ein ausreichender Schutz vor Verschmutzung der in dem Bremsgehäuse 18 vorhandenen Bauteile gewährleistet ist und zugleich bei der Montage eine axiale Verschiebung des ersten Bremsgehäuseteils 19 und des zweiten Bremsgehäuseteils 20 möglich ist.

Weiter umfasst die Bremsanordnung 17 ein erstes ringförmiges Bremselement 21, welches als Innenlamelle ausgebildet ist und an seinem Innendurchmesser eine Innenverzahnung 22 aufweist, welche mit dem Rillenprofil 10 der Spindelstange 3 in Eingriff ist. Hierdurch ist das erste Bremselement 21 axial entlang der Längsachse X der Spindelstange 3 verlagerbar und ist gleichzeitig drehfest mit der Spindelstange 3 verbunden. An einem Innendurchmesser des ersten Bremsengehäuseteils 19 des Bremsengehäuses 18 ist ein zweites ringförmiges Bremselement 23 schwimmend, jedoch drehfest angeordnet. Zwischen dem ersten Bremselement 21 und dem zweiten Bremselement 23 ist ein ringförmiges Zwischenelement 24 angeordnet, welches als Scheibe aus Carbongewebe ausgebildet ist. Das zweite Bremselement 23 liegt dabei an dem ringförmigen Anschlag 19a des ersten Bremsgehäuseteils 19 an.

Die Bremsanordnung 17 umfasst weiter ein als Wellfeder ausgebildetes Vorspannmittel 25, welches das erste Bremselement 21 auf das zweite Bremselement 23 vorspannt, so dass das Zwischenelement 24 zwischen dem ersten Bremselement 21 und dem zweiten Bremselement 23 eingeklemmt wird und somit durch die Reibung eine Bremswirkung auf die Drehbewegung der Spindelstange 3 realisiert ist. Das Vorspannmittel 25 ist dabei axial zwischen dem Kragen 20a des zweiten Bremsgehäuseteils 20 und den Bremselementen 21, 23 angeordnet, wobei das zweite Bremselement 23 an dem ringförmigen Anschlag 19a des ersten Bremsgehäuseteil 19 anliegt. Vorteilhaft kann eine Vorspannung des Vorspannmittels 25 und damit einhergehend die Einstellung der durch die Bremsanordnung 17 auf die Spindelstange 3 wirkenden Bremskraft durch Verstellung der relativen axialen Position des ersten Bremsgehäuseteil 19 und des zweiten Bremsgehäuseteil 20 erfolgen. Nach der Einstellung wird das erste Bremsgehäuseteil 19 mit dem zweiten Bremsgehäuseteil 20 fest verbunden, um so die relative axiale Position des ersten Bremsgehäuseteils 19 und des zweiten Bremsgehäuseteils 20 zu fixieren.

Das zweite Bremsgehäuseteil 20 weist an seiner Oberseite eine durch den Kragen 20a begrenzte Öffnung 20b auf. Die Drehmomentbegrenzungsvorrichtung 6 durchsetzt die Öffnung 20b in dem zweiten Bremsgehäuseteil 20. Hierdurch überlappen sich axial die Bremsanordnung 17 und die Drehmomentbegrenzungsvorrichtung 6. Vorteilhaft ist so eine in axialer Richtung kompakte Ausgestaltung einer Kombination aus der Bremsanordnung 17 und der Drehmomentbegrenzungsvorrichtung 6 geschaffen.

Fig. 2 zeigt eine frontale Querschnittsansicht der Drehmomentbegrenzungsvorrichtung 6 aus Fig. 1 des Stellantriebes 1. **In** dieser Ansicht ist gut zu erkennen, dass die Seitenwand 7b des Koppelelementes 5 die Drehmomentbegrenzungsvorrichtung 6 konzentrisch umgibt. Weiter ist zu erkennen, dass das jeweils als Vorsprung ausgebildete erste Rückhalteelement 15 und das zweite Rückhalteelement 16 einander gegenüberliegend von der Innenseite der Seitenwand 7b des Koppelelementes 5 radial nach innen ragend angeordnet sind.

Das erste Rückhalteelement 15 weist eine erste seitliche Stützfläche 15a und eine der ersten seitlichen Stützfläche 15a gegenüberliegende zweite seitliche Stützfläche 15b auf. Entsprechend weist auch das zweite Rückhalteelement 16 eine erste seitliche Stützfläche 16a und eine der ersten seitlichen Stützfläche 16a gegenüberliegende zweite seitliche Stützfläche 16b auf. Zwischen der Seitenwand 7b des Koppelelementes 5 und der in der Aufnahme 7 aufgenommenen Adapterhülse 8 sind das erste Toleranzelement 13 und das zweite Toleranzelement 14 angeordnet. Dabei ist das erste Toleranzelement 13 zwischen der ersten seitlichen Stützfläche 15a des ersten Rückhalteelementes 15 und der ersten seitlichen Stützfläche 16a des zweiten Rückhalteelementes 16 eingespannt. Hierdurch wird eine drehfeste Verbindung zwischen dem ersten Toleranzelement 13 und dem Koppelelement 5 hergestellt und zugleich eine Vorspannung erzeugt, sodass das erste Toleranzelement 13 an der Innenseite der Seitenwand 7b des Koppelelementes 5 anliegt. Entsprechend ist das zweite Toleranzelement 14 zwischen der zweiten seitlichen Stützfläche 15b des ersten Rückhalteelementes 15 und der zweiten seitlichen Stützfläche 16b des zweiten Rückhalteelementes 16 eingespannt.

In Fig. 2 ist weiter zu erkennen, dass die Adapterhülse 8 entlang eines Innenumfangs eine Innenverzahnung 9 aufweist und dass die Innenverzahnung 9 mit dem Rillenprofil 10 der Spindelstange 3 kämmt und so eine drehfeste Verbindung zwischen der Adapterhülse 8 und der Spindelstange 3 besteht. Vorteilhaft wird durch die drehfeste Verbindung zwischen der Adapterhülse 8 und der Spindelstange 3 auf der einen Seite und der drehfesten Verbindung zwischen dem ersten Toleranzelement 13 bzw. dem zweiten Toleranzelement 14 mit dem Koppelelement 5 auf der anderen Seite sichergestellt, dass bei einer Überschreitung eines Schwellenwertes des auf die Spindelstange 3 wirkenden Drehmomentes die Spindelstange 3 gemeinsam mit der Adapterhülse 8 gegenüber dem ersten Toleranzelement 13 und dem zweiten Toleranzelement 14 durchrutscht. Hierdurch wird vorteilhaft eine wohl definierte Auswahl der bei der Entkopplung wirkenden Rutschfläche 8b ermöglicht, was entsprechend eine verbesserte Definition des oben genannten Schwellenwerts des Drehmomentes erlaubt.

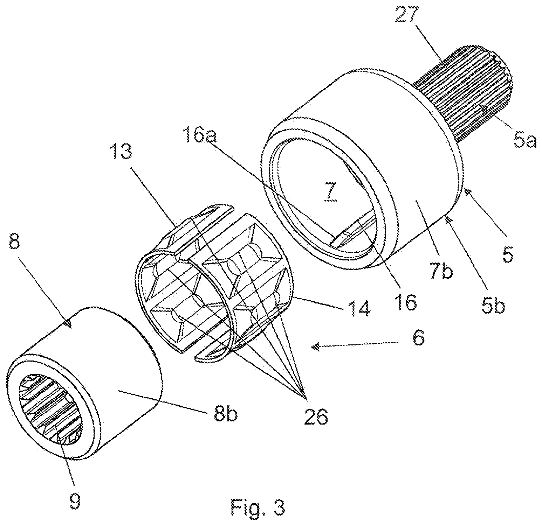

Fig. 3 zeigt die Drehmomentbegrenzungsvorrichtung 6 aus Fig. 1 in einer Explosionsansicht. In dieser Ansicht ist gut zu erkennen, dass die Adapterhülse 8 als Hohlzylinder ausgebildet ist und entlang ihres Innenumfangs eine Innenverzahnung 9 aufweist. Der Außenumfang hingegen ist glatt ausgebildet und bildet, wie oben bereits erläutert, eine abtriebseitige Rutschfläche 8b.

Das erste Toleranzelement 13 und das zweite Toleranzelement 14 sind als teilzylinderförmige Schalensegmente ausgebildet, wobei sowohl das erste Toleranzelement 13 und das zweite Toleranzelement 14 an ihre Außenfläche mehrere Prägungen 26 aufweisen, welche an der Innenseite der Seitenwand 7b des Koppelelementes 5 anliegen, wenn das erste Toleranzelement 13 bzw. das zweite Toleranzelement 14 in der Aufnahme 7 des Koppelelementes 5 eingesetzt sind.

Wie in der in Fig. 3 gezeigten Ansicht gut zu erkennen, ist das erste Ende 5a des Koppelelementes 5 stiftförmig ausgebildet und weist eine Außenverzahnung 27 auf. Die Außenverzahnung 27 dient dabei der drehfesten Verbindung mit einem Getriebe, insbesondere beispielsweise einem Antriebszahnrad, welches mit der Außenverzahnung 27 kämmen kann. Darüber hinaus kann die Außenverzahnung 27 auch direkt mit einer Antriebswelle mit einer entsprechenden Öffnung mit korrespondierender Innenverzahnung verbunden werden, sodass das Koppelelement 5 angetrieben in Rotation versetzt werden kann.

Die an dem zweiten Ende 5b des Koppelelement des vorgesehene Aufnahme 7, welche durch die hohlzylindrisches Seitenwand 7b zeitlich begrenzt wird ist so dimensioniert, dass das erste Toleranzelement 13 und das zweite Toleranzelement 14 darin eingesetzt werden können. Weiter ist das als Vorsprung ausgebildete zweite Rückhalteelement 16 zu sehen, wobei das Rückhalteelement 16 an seinem dem offenen Ende der Aufnahme 7 zugewandten Seite eine Fase 16a aufweist.

Vorstehend wurde die Erfindung anhand eines Ausführungsbeispiels erläutert, bei dem die Drehmomentbegrenzungsvorrichtung zwei Toleranzelemente umfasst. Es versteht sich, dass die Drehmomentbegrenzungsvorrichtung auch nur ein Toleranzelement oder drei oder mehr Toleranzelemente umfassen kann. In diesem Fall sind entsprechend entweder nur ein Rückhalteelement bzw. mehr als zwei Rückhalteelemente vorgesehen, sodass die Rückhalteelemente die in der Aufnahme 7 eingesetzten Toleranzelemente drehfest festlegen können.

## Patentansprüche

1. Stellantrieb, insbesondere Spindelantrieb zur Verstellung einer schwenkbaren Fahrzeugklappe, umfassend
ein Gehäuse (2),
eine in dem Gehäuse (2) drehbar gelagerte Spindelstange (3),
ein erstes Koppelelement (5) zum Antrieb einer Drehbewegung der Spindelstange (3), und
eine zwischen dem ersten Koppelelement (5) und der Spindelstange (3) angeordnete Drehmomentbegrenzungsvorrichtung (6) zur Begrenzung des von dem ersten Koppelelement (5) auf die Spindelstange (3) übertragenen Drehmomentes, umfassend
eine an einem ersten Ende (3a) der Spindelstange (3) drehfest angeordnete Adapterhülse (8), und
ein zwischen der Spindelstange (3) und dem ersten Koppelelement (5) angeordnetes erstes Toleranzelement (13),
**dadurch gekennzeichnet, dass**
das erste Toleranzelement (13) drehfest an einem von erstem Koppelelement (5) und Adapterhülse (8) festgelegt ist,
wobei das eine von erstem Koppelelement (5) und Adapterhülse (8) zumindest ein erstes Rückhalteelement (15) aufweist,
wobei das erste Rückhalteelement (15) als Vorsprung mit einer ersten seitlichen Stützfläche (15a) und einer zweiten seitlichen Stützfläche (15b) ausgebildet ist,
wobei das erste Rückhalteelement (15) einstückig mit dem einen von erstem Koppelelement (5) und Adapterhülse (8) ausgebildet ist,
und wobei sich das erste Toleranzelement (13) an der ersten seitlichen Stützfläche (15a) und an der zweiten seitlichen Stützfläche (15b) des ersten Rückhalteelement (15) abstützt.

2. Stellantrieb nach Anspruch 1, **dadurch gekennzeichnet, dass** das erste Toleranzelement (13) als teilzylinderförmiges Schalenelement ausgebildet ist.

3. Stellantrieb nach einem der Ansprüche 1 oder 2, **dadurch gekennzeichnet, dass** das erste Toleranzelement (13) in radialer Richtung auf das eine von erstem Koppelelement (5) und Adapterhülse (8) orientierte Prägungen (26) aufweist.

4. Stellantrieb nach einem der vorhergehenden Ansprüche, **dadurch gekennzeichnet, dass** das erste Koppelelement eine der Spindelstange (3) zugewandte hohlzylindrische Aufnahme (7) mit einem Boden (7a) und einer Seitenwand (7b) aufweist.

5. Stellantrieb nach Anspruch 4, **dadurch gekennzeichnet, dass** der Boden (7a) ringförmig ausgebildet ist.

6. Stellantrieb nach Anspruch 4 oder 5, **dadurch gekennzeichnet, dass** die Innenseite der Seitenwand (7b), welche der Aufnahme (7) zugewandt ist, eine Reibfläche, über die die reibschlüssige Kraftübertragung zwischen dem ersten Koppelelement (5) und der Spindelstange (3) bzw. der Adapterhülse (8) vermittelt wird.

7. Stellantrieb nach einem der Ansprüche 4 bis 6, **dadurch gekennzeichnet, dass** das erste Toleranzelement (13) und die Adapterhülse (8) zumindest teilweise in der hohlzylindrischen Aufnahme (7) aufgenommen sind.

8. Stellantrieb nach einem der Ansprüche 4 bis 6, **dadurch gekennzeichnet, dass** das erste Toleranzelement (13) und die Adapterhülse (8) vollständig in der hohlzylindrischen Aufnahme (7) aufgenommen sind.

9. Stellantrieb nach einem der Ansprüche 4 bis 8, **dadurch gekennzeichnet, dass** das erste Rückhaltelement (15) auf einer Innenseite der Seitenwand (7b) der hohlzylindrischen Aufnahme (7) angeordnet ist.

10. Stellantrieb nach Anspruch 9, **dadurch gekennzeichnet, dass** das erste Toleranzelement (13) flächig an der Innenseite der Seitenwand (7b) der hohlzylindrischen Aufnahme (7) anliegt und bezüglich einer Drehung durch das erste Rückhalteelement (15) fixiert wird.

11. Stellantrieb nach einem der vorhergehenden Ansprüche, **dadurch gekennzeichnet, dass** in dem Gehäuse (2) eine Bremsanordnung (17) angeordnet ist, wobei die Bremsanordnung (17) ein Bremsengehäuse (18) umfasst.

12. Stellantrieb nach Anspruch 11, **dadurch gekennzeichnet, dass** das Bremsengehäuse konzentrisch um ein erstes Ende (3a) der Spindelstange (3) angeordnet ist.

13. Stellantrieb nach Anspruch 11 oder 12, **dadurch gekennzeichnet, dass** das erste Koppelement (5) das Bremsengehäuse (18) der Bremsanordnung (17) zumindest teilweise durchsetzt.

14. Stellantrieb nach einem der Ansprüche 11 bis 13, **dadurch gekennzeichnet, dass** die Bremsanordnung (17) ein erstes Bremselement (21) umfasst, wobei das erste Bremselement (21) drehfest mit der Spindelstange (3) verbunden ist.

15. Stellantrieb nach Anspruch 14, **dadurch gekennzeichnet, dass** die Bremsanordnung (17) ein zweites Bremselement (23) umfasst, wobei das zweite Bremselement (23) drehfest mit dem Bremsengehäuse (18) verbunden ist.

## Claims

1. Actuating drive, in particular spindle drive for adjusting a pivotable vehicle flap, comprising
a housing (2),
a spindle rod (3) rotatably mounted in the housing (2),
a first coupling element (5) for driving a rotary movement of the spindle rod (3), and
a torque limiting device (6) arranged between the first coupling element (5) and the spindle rod (3) for limiting the torque transmitted from the first coupling element (5) to the spindle rod (3), comprising
an adapter sleeve (8) arranged in a rotationally fixed manner at a first end (3a) of the spindle rod (3), and
a first tolerance element (13) arranged between the spindle rod (3) and the first coupling element (5),
**characterized in that**
that the first tolerance element (13) is fixed in a rotationally fixed manner to one of the first coupling element (5) and the adapter sleeve (8),
wherein the one of the first coupling element (5) and the adapter sleeve (8) has at least one first retaining element (15),
wherein the first retaining element (15) is designed as a projection with a first lateral support surface (15a) and a second lateral support surface (15b),
wherein the first retaining element (15) is formed integrally with one of the first coupling element (5) and the adapter sleeve (8),
and wherein the first tolerance element (13) is supported on the first lateral support surface (15a) and on the second lateral support surface (15b) of the first retaining element (15) .

2. Actuating drive according to claim 1, **characterized in that** the first tolerance element (13) is designed as a partially cylindrical shell element.

3. Actuating drive according to one of claims 1 or 2, **characterized in that** the first tolerance element (13) has embossings (26) oriented in the radial direction toward one of the first coupling element (5) and the adapter sleeve (8).

4. Actuating drive according to one of the preceding claims, **characterized in that** the first coupling element has a hollow cylindrical receptacle (7) facing the spindle rod (3) with a bottom (7a) and a side wall (7b).

5. Actuating drive according to claim 4, **characterized in that** the base (7a) is annular in shape.

6. Actuating drive according to claim 4 or 5, **characterized in that** the inner side of the side wall (7b) facing the receptacle (7) has a friction surface via which the frictional force transmission between the first coupling element (5) and the spindle rod (3) or the adapter sleeve (8) is mediated.

7. Actuating drive according to one of claims 4 to 6, **characterized in that** the first tolerance element (13) and the adapter sleeve (8) are at least partially accommodated in the hollow cylindrical receptacle (7).

8. Actuating drive according to one of claims 4 to 6, **characterized in that** the first tolerance element (13) and the adapter sleeve (8) are completely accommodated in the hollow cylindrical receptacle (7).

9. Actuating drive according to one of claims 4 to 8, **characterized in that** the first retaining element (15) is arranged on an inner side of the side wall (7b) of the hollow cylindrical receptacle (7).

10. Actuating drive according to claim 9, **characterized in that** the first tolerance element (13) rests flat against the inner side of the side wall (7b) of the hollow cylindrical receptacle (7) and is fixed with respect to rotation by the first retaining element (15).

11. Actuating drive according to one of the preceding claims, **characterized in that** a brake arrangement (17) is arranged in the housing (2), wherein the brake arrangement (17) comprises a brake housing (18).

12. Actuating drive according to claim 11, **characterized in that** the brake housing is arranged concentrically around a first end (3a) of the spindle rod (3).

13. Actuating drive according to claim 11 or 12, **characterized in that** the first coupling element (5) at least partially penetrates the brake housing (18) of the brake assembly (17).

14. Actuating drive according to one of claims 11 to 13, **characterized in that** the brake assembly (17) comprises a first brake element (21), wherein the first brake element (21) is connected to the spindle rod (3) in a rotationally fixed manner.

15. Actuating drive according to claim 14, **characterized in that** the brake assembly (17) comprises a second brake element (23), wherein the second brake element (23) is connected in a rotationally fixed manner to the brake housing (18).

## Revendications

1. Actionneur, en particulier entraînement à vis sans fin pour le réglage d'un volet pivotant de véhicule, comprenant
un boîtier (2),
une tige filetée (3) montée de manière rotative dans le boîtier (2), un premier élément d'accouplement (5) pour entraîner un mouvement de rotation de la tige filetée (3), et
un dispositif de limitation de couple (6) disposé entre le premier élément d'accouplement (5) et la tige filetée (3) pour limiter le couple transmis par le premier élément d'accouplement (5) à la tige filetée (3), comprenant
une douille d'adaptation (8) disposée de manière solidaire en rotation à une première extrémité (3a) de la tige filetée (3), et
un premier élément de tolérance (13) disposé entre la tige filetée (3) et le premier élément d'accouplement (5),
**caractérisé en ce que**
le premier élément de tolérance (13) est fixé de manière solidaire en rotation sur l'un parmi le premier élément d'accouplement (5) et la douille d'adaptation (8),
le premier élément d'accouplement (5) et la douille d'adaptation (8) comportant au moins un premier élément de retenue (15),
le premier élément de retenue (15) étant conçu comme une saillie avec une première surface d'appui latérale (15a) et une deuxième surface d'appui latérale (15b),
le premier élément de retenue (15) étant formé d'un seul tenant avec l'un parmi le premier élément d'accouplement (5) et la douille d'adaptation (8), et
le premier élément de tolérance (13) s'appuyant sur la première surface d'appui latérale (15a) et sur la deuxième surface d'appui latérale (15b) du premier élément de retenue (15) .

2. Actionneur selon la revendication 1, **caractérisé en ce que** le premier élément de tolérance (13) est conçu comme un élément en forme de coque partiellement cylindrique.

3. Actionneur selon l'une des revendications 1 ou 2, **caractérisé en ce que** le premier élément de tolérance (13) présente, dans le sens radial, des empreintes (26) orientées vers l'un parmi les éléments de couplage (5) et la douille d'adaptation (8).

4. Actionneur selon l'une des revendications précédentes, **caractérisé en ce que** le premier élément d'accouplement présente un logement cylindrique creux (7) tourné vers la tige filetée (3) avec un fond (7a) et une paroi latérale (7b).

5. Actionneur selon la revendication 4, **caractérisé en ce que** le fond (7a) est de forme annulaire.

6. Actionneur selon la revendication 4 ou 5, **caractérisé en ce que** la face intérieure de la paroi latérale (7b) tournée vers le logement (7) présente une surface de friction par l'intermédiaire de laquelle la transmission de force par friction entre le premier élément d'accouplement (5) et la tige filetée (3) ou la douille d'adaptation (8) est assurée.

7. Actionneur selon l'une des revendications 4 à 6, **caractérisé en ce que** le premier élément de tolérance (13) et la douille d'adaptation (8) sont logés au moins en partie dans le logement cylindrique creux (7).

8. Actionneur selon l'une des revendications 4 à 6, **caractérisé en ce que** le premier élément de tolérance (13) et la douille d'adaptation (8) sont entièrement logés dans le logement cylindrique creux (7).

9. Actionneur selon l'une des revendications 4 à 8, **caractérisé en ce que** le premier élément de retenue (15) est disposé sur une face intérieure de la paroi latérale (7b) du logement cylindrique creux (7).

10. Actionneur selon la revendication 9, **caractérisé en ce que** le premier élément de tolérance (13) repose à plat contre la face intérieure de la paroi latérale (7b) du logement cylindrique creux (7) et est immobilisé en rotation par le premier élément de retenue (15).

11. Actionneur selon l'une des revendications précédentes, **caractérisé en ce qu'**un dispositif de freinage (17) est disposé dans le boîtier (2), le dispositif de freinage (17) comprenant un boîtier de frein (18).

12. Actionneur selon la revendication 11, **caractérisé en ce que** le boîtier de frein est disposé de manière concentrique autour d'une première extrémité (3a) de la tige filetée (3).

13. Actionneur selon la revendication 11 ou 12, **caractérisé en ce que** le premier élément d'accouplement (5) traverse au moins partiellement le boîtier de frein (18) du dispositif de freinage (17).

14. Actionneur selon l'une des revendications 11 à 13, **caractérisé en ce que** le dispositif de freinage (17) comprend un premier élément de freinage (21), le premier élément de freinage (21) étant relié de manière solidaire en rotation à la tige filetée (3).

15. Actionneur selon la revendication 14, **caractérisé en ce que** le dispositif de freinage (17) comprend un deuxième élément de freinage (23), le deuxième élément de freinage (23) étant relié de manière solidaire en rotation au boîtier de frein (18).
